# EUROPÄISCHE PATENTSCHRIFT

(11) **EP 1 690 329 B1**
(45) Veröffentlichungstag und Bekanntmachung des Hinweises auf die Patenterteilung: **27.02.2008**
(21) Anmeldenummer: 04798159.2
(22) Anmeldetag: 04.11.2004
(51) Int. Cl.: H02K 1/02, H02K 1/27, F02M 37/08

(54) **MOTOR FÜR EINE KRAFTSTOFFPUMPE**
MOTOR FOR A FUEL PUMP
MOTEUR D'UNE POMPE A CARBURANT

(30) Priorität: 01.12.2003 DE 10356078
(43) Veröffentlichungstag der Anmeldung: 16.08.2006
(73) Patentinhaber: Siemens VDO Automotive AG, 93056 Regensburg (DE)
(72) Erfinder: WARNKE, Wolfgang, 37293 Herleshausen (DE); MISSUN, Jens, 34225 Baunatal (DE); BAEMPFER, Michael, 36199 Rotenburg (DE)
(86) Internationale Anmeldenummer: PCT/EP2004/052799
(87) Internationale Veröffentlichungsnummer: WO 2005/055392

(56) Entgegenhaltungen:
- EP-A- 0 236 116
- DE-A1- 2 756 626
- DE-A1- 10 309 776
- US-A1- 2002 153 791
- US-B1- 6 204 584
- US-B1- 6 220 826
- US-B1- 6 455 975
- PATENT ABSTRACTS OF JAPAN Bd. 1995, Nr. 10, 30. November 1995 (1995-11-30) -& JP 07 170682 A (YAMAUCHI CORP), 4. Juli 1995 (1995-07-04)
- PATENT ABSTRACTS OF JAPAN Bd. 016, Nr. 233 (E-1209), 28. Mai 1992 (1992-05-28) & JP 04 046539 A (KAWASAKI STEEL CORP), 17. Februar 1992 (1992-02-17)

## Beschreibung

Die Erfindung bezieht sich auf einen elektronisch kommutierten Motor für eine Kraftstoffpumpe mit einem drehfest mit einer Welle verbundenen Rotor mit einem kunststoffgebundenen Ferrit, wobei der Rotor einen von dem hunststoffgebundenen Ferrit gebildeten kraftstoffbeständigen Formkörper aufweist.

Es sind elektronisch kommutierten Motoren als kommutatorlose Gleichstrommotoren, so genannte Elektronikmotoren, bekannt. Solche bürstenlosen Gleichstrommotoren zeichnen sich durch Wartungsfreiheit und vergleichsweise geringe Herstellungskosten aus. Weiterhin ist es bekannt, bei derartigen Motoren einen auf einer Welle angeordneten Rotor aus dauermagnetischem Werkstoff, beispielsweise kunststoffgebundenem Bariumferrit, vorzusehen.

Als problematisch bei den bekannten Motoren hat sich herausgestellt, dass der Rotor bei Kontakt mit Otto- oder Dieselkraftstoffen, wie er bei Einsatz der Motoren zum Antrieb von Kraftstoffpumpen unvermeidbar ist, auf Dauer zerstört wird. Darüber hinaus weisen die Wirkungsgrade der Motoren eine große, von weiteren Systemparametern abhängige Bandbreite auf.

Aus der US-A-6 220 826 ist ein elektronisch kommutierter Motor für eine Kraftstoffpumpe der eingangs genannten Art bekannt.

Aus der US-A 6 204 584 ist ein Rotor für einen elektrisch kommutierten Motor bekannt, der einen rohrförmigen Dauermagnetkörper mit am Umfang alternierenden Polen aufweist und in dessen durchgehende zylindrische Durchgangsöffnung ein Rückschlußelement hineinragt, das einen kreisförmigen Grundquerschnitt besitzt und ein oder mehrere Paare von Abflachungen an seiner Mantelfläche aufweist. Durch die Abflachungen werden Luftspalte zwischen dem Rückschlußelement und dem rohrförmigen Dauermagnetkörper gebildet. Durch Verdrehung des Rückschlusselements in dem Dauermagnetkörper ist eine Einstellbarkeit des Rückschlusselements gegeben.

Aus der US 6,455,975 B1 ist ein Generator mit einer konischen Nabe aus einem magnetischen Stahl bekannt, deren Mantelfläche eine konstante Wandstärke aufweist und auf der Magneten angeordnet sind.

Aufgabe der Erfindung ist es daher, einen Motor der eingangs genannten Art für eine Kraftstoffpumpe zu schaffen, der einen hohen Wirkungsgrad bei gleichzeitig langer Lebensdauer aufweist.

Diese Aufgabe wird erfindungsgemäß dadurch gelöst, dass ein durch Verschieben auf der Welle gegenüber dem Formkörper einstellbares magnetisches Rückschlusselement vorgesehen ist, wobei der Formkörper eine axiale Ausnehmung aufweist, in die das Rückschlusselement eingreift, wobei die axiale Ausnehmung eine Öffnungsseite und eine der Öffnungsseite gegenüberliegende Grundseite aufweist, an der der Formkörper mit der Welle verbunden ist, und wobei die axiale Ausnehmung einen Trichter bildet, der sich zur Öffnungsseite hin konisch erweitert, und dass das Rückschlusselement einen Konus bildet, der sich zur Grundseite der Ausnehmung hin verjüngt.

Durch die Einstellbarkeit des Rückschlusselementes gegenüber dem einen Formkörper bildenden kunststoffgebundenen Ferrit kann den Wirkungsgrad des Motors optimierend der magnetische Fluss speziell auf das Motorsystem abgestimmt werden. Der Formkörper gestattet dabei ein gezieltes Zusammenwirken von Rückschlusselement und dem magnetisch mehrpoligen Rotor. Der Formkörper selbst behält auch in einer Kraftstoffumgebung dauerhaft seine Form, wodurch nicht nur die elektromagnetischen Eigenschaften und die Leistungsabgabe des Motors über die Zeit konstant bleiben, sondern auch eine den Verschleiß erhöhende Unwucht des Rotors zuverlässig vermieden wird.

Durch das Verschieben des Rückschlusselements wird eine besonders exakte Zuordnung von Formkörper und Rückschlusselement bei hoher Stabilität der Motoranordnung erreicht.

Durch das Eingreifen des Rückschusselements in die Ausnehmung wird ein besonders kompakter Aufbau erreicht.

Man könnte sich vorstellen, Ausnehmung und Formkörper derart auszubilden, dass das Rückschlusselement den Formkörper vollständig durchgreift. Eine insbesondere hohe Stabilität der Motoranordnung und deren leichte Montierbarkeit wird aber dann erreicht, wenn die axiale Ausnehmung eine Öffnungsseite und eine der Öffnungsseite gegenüberliegende Grundseite, an der der Formkörper mit der Welle verbunden ist, aufweist.

Durch die Ausbildung der Ausnehmung als Trichter und des Rückschlusselements als Konus wird die Einstellbarkeit des Rückschlusselements gegenüber dem Formkörper wesentlich erleichtert.

Entspricht gemäß einer vorteilhaften Weiterbildung der Erfindung der Öffnungswinkel des Trichters dem Kegelwinkel des Konus, so kann der Magnetfluss besonders exakt auf das Motorsystem abgestimmt werden; die Mantelfläche des Konus und die korrespondierende Trichterinnenfläche liegen dabei stets parallel zueinander.

Grundsätzlich sind beliebige kraftstoffbeständige Kunststoffe als Träger für den Ferrit verwendbar, die eine hohe Formbeständigkeit aufweisen. Von besonderem Vorteil insbesondere für eine hohe chemische Beständigkeit und eine sehr hohe Dimensionsstabilität des Formkörpers ist es aber, wenn der den Ferrit bindende Kunststoff Polyphenylensulfid (PPS) ist. Für PPS spricht weiterhin seine inhärente Flammwidrigkeit. Da der Ferrit für die permanentmagnetischen Eigenschaften des Rotors verantwortlich ist, ist es zudem günstig, wenn er eine große Koerzitivkraft aufweist.

Gemäß einer aus Versuchen entwickelten vorteilhaften Weiterbildung der Erfindung weist der Formkörper stabilisierendes Fasermaterial auf. Als besonders geeignet und darüber hinaus kostengünstig hat sich ein Volumenanteil von in etwa 2 % Glasfasern herausgestellt.

Man könnte sich vorstellen, den Formkörper beispielsweise auf die Welle aufzustecken und mit ihr zu verkleben. Hingegen ist eine besonders einfache und dauerhaltbare Verbindung des Rotors mit der Welle bei gleichzeitiger Vermeidung einer Rotorunwucht gewährleistet, wenn gemäß einer anderen vorteilhaften Weiterbildung der Erfindung der Formkörper auf die Welle aufgespritzt ist und in einem Verbindungsbereich von Welle und Formkörper die Welle eine ihre Oberflächenrauhigkeit erhöhende Struktur aufweist. Diese Struktur kann zum Beispiel eine Anrauhung oder - besonders vorteilhaft - eine Ausbildung eines Rändels sein.

Eine besonders einfache und kostengünstige Herstellung des Motors ergibt sich, wenn gemäß einer anderen vorteilhaften Weiterbildung der Erfindung das Rückschlusselement auf die Welle aufgepresst ist. Das Rückschlusselement kann dabei nach der Verbindung von Formkörper und Welle auf diese die exakte Einstellung gegenüber dem Formkörper sicherstellend gepresst werden.

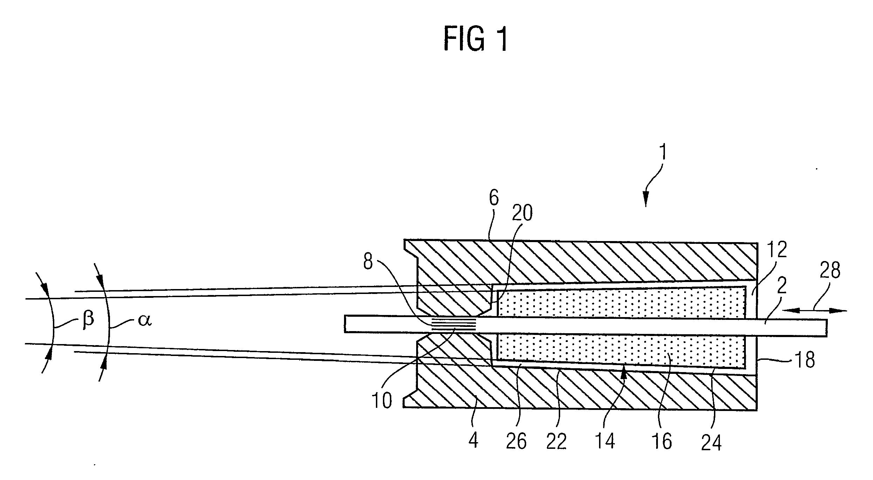

Ein Ausführungsbeispiel der Erfindung ist in der Zeichnung dargestellt und wird im Folgenden näher beschrieben. Darin zeigt die einzige Figur eine geschnittene Teilansicht eines Motors für eine Kraftstoffpumpe.

In der Figur ist in einer schematischen Ansicht ein magnetisch mehrpoliger Rotor 1 eines nicht weiter dargestellten elektronisch kommutierten Motors für eine Kraftstoffpumpe dargestellt. Der Rotor 1 ist drehfest mit einer Welle 2 verbunden und weist einen kunststoffgebundenen Ferrit 4 auf, dem ein stabilisierendes Fasermaterial beigemischt ist. Der kunststoffgebundene Ferrit 4 bildet einen kraftstoffbeständigen Formkörper 6, der auf die Welle 2 aufgespritzt und gleichzeitig magnetisiert wird, so dass er einen mehrpoligen Dauermagneten bildet. In einem Verbindungsbereich 8 von Welle 2 und Formkörper 6 besitzt die Welle 2 eine als Rändel ausgebildete, ihre Oberflächenrauhigkeit erhöhende Struktur 10.

Der Formkörper 6 weist ferner eine axiale Ausnehmung 12 auf, in die ein Rückschlusselement 14 aus einem weichmagnetischen Werkstoff 16 eingreift. Das Rückschlusselement 14 erhöht den magnetischen Fluss und kann anforderungsgerecht in Abhängigkeit vom Formkörper 6 und vom Motor-Pumpen-System dimensioniert sein. Die axiale Ausnehmung 12 des Formkörpers 6 weist einerseits eine Öffnungsseite 18 und andererseits eine der Öffnungsseite 18 gegenüberliegende Grundseite 20 auf. An der Grundseite 20 der Ausnehmung 12 ist der Formkörper 6 mit der Welle 2 verbunden. Es ist weiterhin zu erkennen, dass das Rückschlusselement 14 vollständig innerhalb des Formkörpers 6 angeordnet ist.

Zur Einstellung des Rückschlusselements 14 gegenüber dem Formkörper 6 bildet dessen axiale Ausnehmung 12 einen Trichter 22, der sich zur Öffnungsseite 18 hin konisch erweitert. Korrespondierend mit dem Trichter 22 bildet das Rückschlusselement 14 einen Konus 24, der sich zur Grundseite 20 der Ausnehmung 12 hin verjüngt. Dabei entsprechen sich der Öffnungswinkel α des Trichters 22 und der Kegelwinkel β des Konus 24, so dass ein Luftspalt 26 durch parallele Flächen begrenzt ist. Bei einer Einstellung des auf die Welle 2 aufgepressten Rückschlusselements 14 gegenüber dem Formkörper 6, die durch Verschieben in Richtungen eines Doppelpfeils 28 erfolgt, wird der Luftspalt 26 somit gleichmäßig verändert. Die Breite des Luftspalts 26 beeinflusst unmittelbar den magnetischen Fluss.

## Patentansprüche

1. Elektronisch kommutierter Motor für eine Kraftstoffpumpe mit einem drehfest mit einer Welle (2) verbundenen Rotor (1) mit einem kunststoffgebundenen Ferrit, wobei der Rotor (1) einen von dem kunststoffgebundenen Ferrit (4) gebildeten kraftstoffbeständigen Formkörper (6) aufweist, **dadurch gekennzeichnet, dass** ein durch Verschieben auf der Welle (2) gegenüber dem Formkörper (6) einstellbares magnetisches Rückschlusselement (14) vorgesehen ist, wobei der Formkörper eine axiale Ausnehmung (12) aufweist, in die das Rückschlusselement (14) eingreift, wobei die axiale Ausnehmung (12) eine Öffnungsseite (18) und eine der Öffnungsseite (18) gegenüberliegende Grundseite (20) aufweist, an der der Formkörper (6) mit der Welle (2) verbunden ist, und wobei die axiale Ausnehmung (12) einen Trichter (22) bildet, der sich zur Öffnungsseite (18) hin konisch erweitert, und dass das Rückschlusselement (14) einen Konus (24) bildet, der sich zur Grundseite (20) der Ausnehmung (12) hin verjüngt.

2. Motor nach Anspruch 1, **dadurch gekennzeichnet, dass** der Öffnungswinkel (α) des Trichters (22) dem Kegelwinkel (β) des Konus (24) entspricht.

3. Motor nach einem der vorhergehenden Ansprüche, **dadurch gekennzeichnet, dass** der den Ferrit (4) bindende Kunststoff Polyphenylensulfid ist.

4. Motor nach einem der vorhergehenden Ansprüche, **dadurch gekennzeichnet, dass** der Formkörper (6) stabilisierendes Fasermaterial aufweist.

5. Motor nach einem der vorhergehenden Ansprüche, **dadurch gekennzeichnet, dass** der Formkörper (6) auf die Welle (2) aufgespritzt ist und dass in einem Verbindungsbereich (8) von Welle (2) und Formkörper (6) die Welle (2) eine ihre Oberflächenrauhigkeit erhöhende Struktur (10) aufweist.

6. Motor nach einem der vorhergehenden Ansprüche, **dadurch gekennzeichnet, dass** das Rückschlusselement (14) auf die Welle (2) aufgepresst ist.

## Claims

1. Electronically commutated motor for a fuel pump, comprising a rotor (1) which is connected to a shaft (2) in a rotationally fixed manner and has a plastic-bonded ferrite, in which the rotor (1) has a fuel-resistant shaped body (6) which is formed by the plastic-bonded ferrite (4), **characterized in that** a magnetic return element (14) which can be adjusted in relation to the shaped body (6) by being moved on the shaft (2) is provided, with the shaped body having an axial recess (12) in which the return element (14) engages, with the axial recess (12) having an opening side (18) and a base side (20) which is situated opposite the opening side (18) and at which the shaped body (6) is connected to the shaft (2), and with the axial recess (12) forming a funnel (22) which widens conically toward the opening side (18), and **in that** the return element (14) forms a cone (24) which tapers toward the base side (20) of the recess (12).

2. Motor according to Claim 1, **characterized in that** the opening angle (α) of the funnel (22) corresponds to the cone angle (β) of the cone (24).

3. Motor according to either of the preceding claims, **characterized in that** the plastic which bonds the ferrite (4) is polyphenylene sulfide.

4. Motor according to one of the preceding claims, **characterized in that** the shaped body (6) has stabilizing fiber material.

5. Motor according to one of the preceding claims, **characterized in that** the shaped body (6) is injection molded onto the shaft (2), and **in that**, in a connecting region (8) between the shaft (2) and the shaped body (6), the shaft (2) has a pattern (10) which increases its surface roughness.

6. Motor according to one of the preceding claims, **characterized in that** the return element (14) is pressed onto the shaft (2).

## Revendications

1. Moteur pour pompe à carburant commuté électroniquement, comportant un rotor (1) à ferrite liée par matière plastique fixé en blocage de rotation à un arbre (2), où le rotor (1) a un corps moulé (6) résistant aux carburants formé par la ferrite (4) liée par matière plastique, **caractérisé par le fait qu**'il est prévu un organe magnétique formant culasse (14) réglable par rapport au corps moulé (6) en le déplaçant sur l'arbre (2), où le corps moulé comporte un évidement axial (12) dans lequel s'introduit l'organe formant culasse (14), l'évidement axial (12) comportant un côté ouverture (18) et, à l'opposé du côté ouverture (18), un côté base (20), par lequel le corps moulé (6) est lié à l'arbre (2), et l'évidement axial (12) formant un entonnoir (22) qui s'élargit d'une façon conique vers le côté ouverture (18), et que l'organe formant culasse (14) forme un cône (24) qui s'amincit vers le côté base (20) de l'évidement (12).

2. Moteur selon la revendication 1, **caractérisé par le fait que** l'angle d'ouverture (α) de l'entonnoir (22) et l'angle conique (β) du cône (24) sont identiques.

3. Moteur selon l'une des revendications précédentes, **caractérisé par le fait que** la matière plastique fixant la ferrite (4) est du polysulfure de phénylène.

4. Moteur selon l'une des revendications précédentes, **caractérisé par le fait que** le corps moulé (6) comporte une matière fibreuse stabilisante.

5. Moteur selon l'une des revendications précédentes, **caractérisé par le fait que** le corps moulé (6) est moulé par injection sur l'arbre (2) et que, dans une zone de liaison (8) entre l'arbre (2) et le corps moulé (6), l'arbre (2) comporte une structure (10) augmentant la rugosité de sa surface.

6. Moteur selon l'une des revendications précédentes, **caractérisé par le fait que** l'organe formant culasse (14) est enfoncé par pression sur l'arbre (2).
